# EUROPEAN PATENT SPECIFICATION

(11) **EP 2 704 609 B1**
(45) Date of publication and mention of the grant of the patent: **21.07.2021**
(21) Application number: 11746333.1
(22) Date of filing: 21.07.2011
(51) Int. Cl.: B60N 2/885, B60N 2/24, B60N 2/68, B60N 2/90

(54) **BODY OF A MASS TRANSIT VEHICLE CHAIR**
KÖRPER EINES NAHVERKEHRSFAHRZEUGSITZES
CORPS D'UN SIÈGE DE VÉHICULE DE TRANSPORT EN COMMUN

(30) Priority: 04.05.2011 PL 39476411
(43) Date of publication of application: 12.03.2014
(73) Proprietor: Szymanski, Maciej, Poczta Rokietnica 62-090 (PL)
(72) Inventor: Szymanski, Maciej, Poczta Rokietnica 62-090 (PL)
(74) Representative: Luczak, Jerzy
(86) International application number: PCT/PL2011/000081
(87) International publication number: WO 2012/150870

(56) References cited:
- EP-A1- 0 982 180
- EP-A2- 0 677 421
- WO-A1-97/10968
- DE-A1- 3 640 016
- DE-B4- 19 758 755
- GB-A- 2 313 047

## Description

The subject of the invention is a body of a mass transit vehicle chair, to be used as a carrying structure for the placement of upholstery linings on it.

The chair construction has connections of the body with the seat and backrest plates.
There are solutions where the seat and the backrest has an upholstery lining. The edges of the upholstery lining are inserted in the slot between the upper edge of the wall, including the side wall, and the external edge of the seat and backrest plate.

A required feature of chairs with upholstery lining of the seat and backrest is the necessity to maintain an appropriate slot between the structural element of the reinforcement of the body and the upholstery lining turned back inside the chair.

In case of a chair where the slot will be too small, the upholstery lining may not fit within the slot due to its thickness, causing a cut of the fabric or unsightly bulging. A real hazard is also the inability to assemble the body - upholstery lining system.

In the case when the slot is too large, a gap will occur between the edge of the body reinforcement element, and the surface of the lining, turned back inside the chair. In this gap dirt and grime will collect during the operation of the chair, there is also the possibility of small change or credit cards falling out of pockets of the seat user's and sliding into these gaps.

The vehicle chair, e.g. for a train, presented in the GB 2313047 A patent has a rear load bearing part and a support part. The structure of this solution, with side walls with an arch, changing over the entire length of the shape of the internal surface, is intended to increase the chair body strength. This solution will not establish the method of installation of the upholstery lining on the seat and backrest in the chair body. The presented drawings show that the seat or backrest plate with the upholstery lining is located on the threshold of connection between side and bottom plates of the body.

The chair for public transport vehicles, such as buses and similar, presented in the WO 97/10968 A1 patent description contains a load-bearing structure made of metal bars, and a body of plastic, characterized by that it is a single injection-formed part, and has an envelope, which forms a support for the load-bearing structure, and in which the backrest zone has at the top at least one grip, the rear part of which contains multiple parallel ribs, the free ends of which form a gripping surface. This solution does not establish the method of installation of the upholstery lining on the seat and backrest in the chair body. The presented drawings show that the seat or backrest plate with the upholstery lining is located on the upper surface of the side walls of the body.

In the EP 0982180 A1 patent a passenger seat in a personal transport vehicle was presented, manufactured of injected plastic, with a part of a socket and an attached backrest, which is characterized by the backrest on its longitudinal sides, in each case, has at least one lengthwise pipe indentation element. This solution does not establish the method of installation of the upholstery lining on the seat and backrest in the chair body. The presented drawings show that the seat or backrest plate with the upholstery lining is located on the upper surface of the side walls of the body.

Personal transport chair, shown in the DE 19758755 patent is characterized by the load-carrying side walls, are shaped in a cross-section in an approximate shape of a letter C, and of which each possesses multiple ribs parallel to the lengthwise direction of the load carrying beam. Edge of the lining in this solution is not tangent to the edge of the side wall. This solution does not establish the method of installation of the upholstery lining on the seat and backrest in the chair body. The presented drawings show that the seat or backrest plate with the upholstery lining is located on the upper surface of the side walls of the body.

It is known from German patent application No. DE 3640016 A1, where the invention relates to a plastic shell for seats which integrally forms the actual seat and the back, rests on a frame and has edge reinforcements in the form of hollow sections. With such a plastic shell, the aim is to prevent the loss of unity of the hollow sections even in the transition region between actual seat and back. This object is achieved in that each of the hollow sections contains a lost core which is also provided in the transition region between actual seat and back and is of lightweight

The EP0677421 A2 shows a body of a mass transit vehicle chair, in the form of a spatially shaped element which forms connected seat and backrest plates, with external, lateral reinforcement of the structure, which are walls with an arching, changing over the entire length of the internal surface shape, which over the entire length changes into side walls with variable height, approximately perpendicular to the surface of the seat and backrest plate.

In solutions used so far the seat and backrest plates must be specially adapted to the thickness of the upholstery fabric (e.g. by grinding of the edges or by special construction).

The solutions presented above apply to the construction of the chair body, taking into account in particular the technology of manufacture and strength parameters of the chair.

The presented solution, which is the subject of the invention, eliminates the abovementioned drawbacks and inconveniences.
The essence of the invention is a body of a mass transit vehicle according to claim 1. The use of the solution presented in the invention enables the following technical and utility effects:
- high strength of the chair body against the forces acting on the chair from the passenger loads and resulting dynamic loads, resulting from the movement of the vehicle, caused by the shape of the side walls which convey these forces, taking into account the abovementioned forces, taking into account a security factor,
- ability to create the body in one injection process,
- ability to use an injection mould with an uncomplicated shape, which facilitates the injection process, product cooling and taking out of the form,
- lowering the energy requirement for the body manufacturing process,
- ability to adapt the shape of the body to any upholstery,
- facilitation of chair installation.

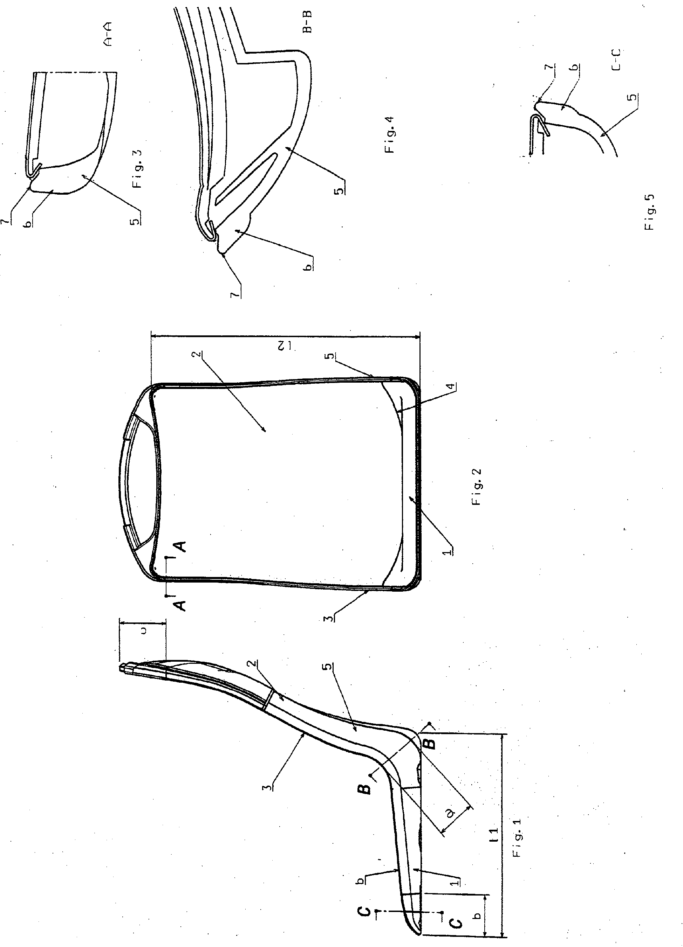

The subject of the invention, in an example implementation, which is not limiting, was shown on a drawing, where on fig. 1 the body was shown in a side view, on fig. 2 the body was shown in a view on the main body, on fig. 3 the A-A cross-section from fig. 2 was shown, on fig. 4 the B-B cross-section from fig. 1 was shown and on fig. 5 the C-C cross-section from fig. 1 was shown.

The body of a mass transit vehicle chair is a spatially shaped element which forms connected seat 1 and backrest 2 plates, with external, lateral reinforcement of the structure 3. The lateral reinforcement 3 is formed by walls 4 with an arching, changing over the entire length of the internal surface shape, which over the entire length changes into side walls 5 with variable height, approximately perpendicular to the surface of the seat 1 and backrest 2 plate. Side walls 5 have an external edge zone 6 with a thickness above 1.5 of the wall 5 thickness. In the zone of maximum bending of the seat I and backrest 2 plate the side walls have the height of "a" approximately being 0.15 - 0.30, advantageously 0.20 of the length "1" of the part of the seat 1, lowering in the top zone of the seat 1 and backrest 2, so that at a distance "b" from the ends of the seat 1 and at a distance "c" from the ends of backrest 2 within limits 0.05 - 0.20, advantageously 0.1 of the length "1" of the seat 1 and backrest 2, have the height of 0,6 - 0,2, advantageously 0.4 of the maximum height of the side wall 5, and are connected by a slight arch with the border edges of the seat 1 and the backrest 2.

Upholstery lining is turned back under the seat plate 1 and backrest plate 2. Arch 7 of the edge zone 6 of the side wall 5 causes the fabric completely filling with its thickness the space of the arch 7, resulting in a tight connection.

## Claims

1. body of a mass transit vehicle chair, in the form of a spatially shaped element which forms connected seat (1) and backrest (2) plates, with external, lateral reinforcement of the structure, which are walls (4) with an arching, changing over the entire length of the internal surface shape, which over the entire length changes into side walls (5) with variable height, approximately perpendicular to the surface of the seat (1) and backrest (2) plate, **characterized in that** they have an external edge zone (6) with a thickness above 1.5 of the wall (5) thickness, in the zone of maximum bending of the seat (1) and backrest (2) plate they have the height approximately being 0.15 - 0.30 of the length of the part of the seat (1), lowering in the top zone of the seat (1) and backrest (2), so that at a distance from the ends of the seat (1) and backrest (2) within limits 0.05 - 0.20 of the length of the seat (1) and backrest (2), they have the height of 0,6-0,2 of the maximum height of the side wall (5), and they are connected by a slight arch (7) with the border edges of the seat (1) and backrest (2).

## Patentansprüche

1. Ein Sitzgestell eines Massenverkehrsmittels, in Form eines räumlich gestalteten Elementes, das zusammenverbundene Sitz- (1) und Lehnplatte (2), mit äußeren seitlichen Konstruktionsversteifungen bildet, welche von Wandungen (4) mit einer bogenförmigen, auf der ganzen Länge veränderlichen Konturlinie der inneren Flächen gebildet sind, die auf ihrer ganzen Länge in Außenwände (5) mit veränderlicher Höhe, annährend senkrecht zur Sitz- (1) und Lehnplatte (2) übergehen, **dadurch gekennzeichnet, dass** sie einen Außenkantenbereich (6) mit einer Dicke größer als 1,5 Wandstärke (5) aufweisen und im Bereich der maximaler Verbiegung der Sitz- (1) und Lehnplatte (2) eine in der Richtung zum Spitzenbereich des Sitzes (1) und der Lehne (2) absenkende Höhe von annährend 0,15 - 0,30 der Teillänge des Sitzes (1) haben, sodass sie in einer Entfernung von den Sitz- (1) und Lehnrändern (2), die in den Grenzen von 0,05 - 0,20 der Sitz- (1) und Lehnlänge (2) liegt, eine Höhe von 0,6 - 0,20 der maximalen Wandhöhe (5) aufweisen und sich über leichte Verbiegung (7) mit den äußeren Sitz- (1) und Lehnkanten (2) verbinden.

## Revendications

1. Bâti de siège de véhicule de transport public, sous la forme d'un élément façonné en espace, formant des plaques accouplées d'assise (1) et de dossier (2), avec des raidisseurs latéraux externes de la structure, qui sont des parois (4) avec un contour arqué, variable sur toute la longueur, de surfaces internes, passant sur toute la longueur dans des parois latérales (5) de hauteur variable, approximativement perpendiculaires à la surface des plaques d'assise (1) et du dossier (2), **caractérisé en ce qu'**ils ont une zone de bord externe (6) d'épaisseur supérieure à 1, 5 d'épaisseur de paroi (5) et, dans la zone de flexion maximale des plaques d'assise (1) et de dossier (2), ils ont une hauteur d'environ 0,15 - 0,30 de la longueur de la partie de l'assise (1), diminuant vers la zone supérieure de l'assise (1) et du dossier (2) ainsi, de sorte que, à une distance des extrémités du siège (1) et de dossier (2) de 0,05 à 0,20 de la longueur du siège (1) et du dossier (2), ils ont une hauteur de 0,6 à 0,20 de la hauteur maximale de la paroi latérale (5) et, par une légère courbe (7), ils rejoignent les bords extrêmes du siège (1) et du dossier (2).
